# EUROPÄISCHE PATENTSCHRIFT

(11) **EP 2 860 078 B1**
(45) Veröffentlichungstag und Bekanntmachung des Hinweises auf die Patenterteilung: **09.12.2015**
(21) Anmeldenummer: 14002703.8
(22) Anmeldetag: 02.08.2014
(51) Int. Cl.: B60W 50/12, B60W 30/095, G08G 1/16

(54) **Verfahren zum Betrieb eines Sicherheitssystems eines Kraftfahrzeugs**
Method for operating a safety system of a motor vehicle
Procédé d'opération d'un système de sécurité d'un véhicule automobile

(30) Priorität: 02.10.2013 DE 102013016436
(43) Veröffentlichungstag der Anmeldung: 15.04.2015
(73) Patentinhaber: AUDI AG, 85045 Ingolstadt (DE)
(72) Erfinder: Danzl, Martin, DE - 83115 Neubeuern (DE); Wüst, Sabine, DE - 85051 Ingolstadt (DE); Gollewski, Torsten, DE - 85080 Gaimersheim (DE); Kienzl, Georg, DE - 85055 Ingolstadt (DE); Hagemann, Franz-Michael, DE - 85120 Hepberg (DE); Siedersberger, Karl-Heinz, DE - 86669 Königsmoos (DE); Miehling, Thomas, DE - 85057 Ingolstadt (DE); Kunsch, Peter, DE - 85123 Karlskron (DE)
(74) Vertreter: Thielmann, Frank

(56) Entgegenhaltungen:
- DE-A1- 10 126 224
- DE-A1-102011 086 241
- DE-A1-102011 109 618
- JP-A- 2007 331 652
- US-A1- 2008 252 466

## Beschreibung

Die Erfindung betrifft ein Verfahren zum Betrieb eines Sicherheitssystems eines Kraftfahrzeugs mit einem Fahrerzustandserfassungsmittel, das nach Ermitteln einer einen Fahrerzustand beschreibenden Fahrerzustandsgröße aus Daten des Fahrerzustandserfassungsmittels und Überprüfen, ob eine die Fahrerzustandsgröße auswertende, eine Unfähigkeit zur Führung des Kraftfahrzeugs seitens des Fahrers anzeigende Auslösebedingung erfüllt ist, bei Erfüllen der Auslösebedingungen die folgenden Schritte durchführt:
- Ermitteln wenigstens eines für das Kraftfahrzeug erreichbaren sicheren Abstellbereichs im Fahrzeugumfeld durch Auswerten von aus das Umfeld des Kraftfahrzeugs beschreibenden Umfelddaten bestimmten Sicherheitsgrößen, die ein Unfallrisiko bei einem Abstellen des Kraftfahrzeugs in einem Bereich oder an einer Position des Umfelds des Kraftfahrzeugs beschreiben,
- Steuerung von Fahrzeugsystemen zur autonomen Längs- und Querführung des Kraftfahrzeugs zum Abstellbereich und zum Abstellen des Kraftfahrzeugs im Abstellbereich, wobei zur autonomen Längs- und Querführung des Kraftfahrzeugs aus den Umfelddaten, der Ego-Position des Kraftfahrzeugs und dem Abstellbereich eine Steuertrajektorie für das Kraftfahrzeug für zumindest einen Abschnitt des Wegs zum Abstellbereich bestimmt wird.

Ein wesentliches Entwicklungsfeld im Kraftfahrzeugbereich ist es, Systeme zu entwickeln, die Gefahrsituationen im Straßenverkehr frühzeitig erkennen, und bei Vorliegen einer solchen Gefahrsituation den Fahrer des Kraftfahrzeugs frühzeitig warnen bzw. aktiv in die Fahrzeugführung eingreifen. Diese Systeme werten typischerweise Umfelddaten aus, um insbesondere aus der Bewegung anderer Kraftfahrzeug kritische Verkehrssituationen vorauszusagen und durch Warnungen oder durch aktive Steuereingriffe Unfälle zu verhindern oder Unfallfolgen zu mindern. Es ist dabei bekannt, dass, neben der Fahrsituation außerhalb des Kraftfahrzeugs, die Aufmerksamkeit und Reaktionsfähigkeit des Fahrers die Unfallwahrscheinlichkeit und die Unfallfolgen wesentlich beeinflussen. Daher sind im Stand der Technik auch Systeme bekannt, die einen Fahrerzustand erfassen und beispielsweise bei einer erkannten Müdigkeit eines Fahrers den Fahrer darauf hinweisen, dass das Kraftfahrzeug zeitnah abgestellt und der Fahrbetrieb unterbrochen werden sollte.

Aus der Druckschrift DE 10 2011 086241 A1 ist ein Verfahren nach dem Oberbegriff des Anspruchs 1 zum sicheren

Abstellen eines Fahrzeugs bekannt. Nach einem Erkennen einer Notsituation fährt ein Fahrerassistenzsystem das Fahrzeug an einen Straßenrand. Zur Erkennung einer Notsituation kann die Müdigkeit, die Abgelenktheit oder der Gesundheitszustand eines Fahrers überprüft werden. Wird eine Notsituation erkannt, so entwickelt eine Steuereinheit eine Strategie zum sicheren Abstellen des Fahrzeugs am Fahrbahnrand. Dabei können das Wetter, der Verkehr und/oder die Beschaffenheit des Fahrbahnrandes berücksichtigt werden. Nach Erstellen der Abstellstrategie werden die notwendigen Fahrerassistenzsysteme gestartet, um das Fahrzeug sicher, insbesondere ohne Einwirkung des Fahrers, abzustellen.

Der Erfindung liegt damit die Aufgabe zugrunde, ein Verfahren zum Betrieb eines Sicherheitssystems anzugeben, das es erlaubt, besser auf kritische Fahrsituationen zu reagieren, die durch einen Fahrerzustand verursacht sind. Die Aufgabe wird erfindungsgemäß durch ein Verfahren der eingangs genannten Art gelöst, wobei, wenn die Fahrbarkeit der Steuertrajektorie von der zukünftigen Bewegung wenigstens eines weiteren Kraftfahrzeugs abhängt, aus den Umfelddaten und der Steuertrajektorie ein Sollfahrmanöver oder eine Solltrajektorie, bei dessen bzw. deren Ausführung durch das weitere Kraftfahrzeug die Steuertrajektorie für das Kraftfahrzeug fahrbar ist, für das weitere Kraftfahrzeug berechnet wird und das Sollfahrmanöver bzw. die Solltrajektorie beschreibende Fahranweisungsdaten durch Ansteuerung einer Kommunikationseinrichtung an das weitere Kraftfahrzeug übertragen werden.

Der Erfindung liegt die Idee zugrunde, nach Auswerten der Daten eines Fahrerzustandserfassungsmittels und der Erkennung des Vorliegens eines Fahrerzustandes, in dem der Fahrer unfähig ist, das Kraftfahrzeug weiterzuführen, das Kraftfahrzeug autonom zu einem sicheren Abstellbereich zu führen. Diese Situation kann beispielsweise auftreten, wenn ein Fahrer im laufenden Fahrbetrieb einen Herzinfarkt erleidet oder aus anderen insbesondere medizinischen Gründen bewusstlos bzw. allgemein handlungsunfähig wird. Eine Fahrunfähigkeit des Fahrers kann jedoch auch dann gegeben sein, wenn der Fahrer unkontrollierte Muskelbewegungen durchführt. Die Fahrerzustandsgröße kann durch eine Auswertung der Benutzung der Bedienelemente und eine Plausibilisierung dieser Bedieneingaben durch die Umfelddaten ermittelt werden. Damit kann erkannt werden, wenn der Fahrer Bedieneingaben durchführt, die nicht willentlich durchgeführt werden. Ein Beispiel ist das Bewegen des Lenkrads bei einem Zusammensacken. Die Fahrerzustandsgröße kann bei Erkennung solcher nicht plausiblen Bedieneingaben angepasst werden. Es kann über eine solche Plausibilisierung auch erkannt werden, wenn offensichtlich notwendige Bedieneingaben, die beispielsweise zum Folgen eines Straßenverlaufs notwendig sind, durch den Fahrer unterbleiben.

Vorteilhaft können zusätzlich oder alternativ Fahrerzustandserfassungsmittel, beispielsweise Kameras, insbesondere Infrarotkameras, und/oder Pulssensoren insbesondere am Lenkrad oder im Gurtband, genutzt werden, um ein Fahrerverhalten und/oder Körperfunktionen des Fahrers zu erfassen und in Abhängigkeit des Fahrerverhaltens und/oder der erfassten Körperfunktion die Fahrerzustandsgröße anzupassen. Verfahren zur Erkennung von Bewusstlosigkeit, eines Herzinfarktes und anderer körperlicher Beschwerden, die zu einer Fahrunfähigkeit des Fahrers führen können, sind im Stand der Technik bekannt und sollen daher nicht weiter erläutert werden.

Eins wesentliches Merkmal des erfindungsgemäßen Verfahrens ist es, dass bei Erkennen einer Unfähigkeit des Fahrers zur Führung des Kraftfahrzeugs ein für das Kraftfahrzeug erreichbarer sicherer Abstellbereich ermittelt wird und das Kraftfahrzeug autonom zu diesem Bereich geführt wird. Wird ermittelt, dass der Fahrer nicht mehr zur Führung des Kraftfahrzeugs befähigt ist, so ist es vorteilhaft, das Kraftfahrzeug zum Stillstand zu bringen, um eine unkontrollierte Bewegung des Kraftfahrzeugs zu verhindern. Zugleich ist es in einer Vielzahl von Verkehrssituationen jedoch nachteilig, das Fahrzeug, insbesondere plötzlich, an der momentanen Kraftfahrzeugposition zum Stillstand zu bringen. Durch ein solches sofortiges Abstellen des Kraftfahrzeugs wird das Kraftfahrzeug zu einem Verkehrshindernis für weitere Kraftfahrzeuge und kann, insbesondere an unübersichtlichen Abstellpositionen, eine Sicherheitsgefährdung für weitere Kraftfahrzeuge darstellen. Gleichzeitig erschwert ein Abstellen an der Ist-Position, beispielsweise auf der mittleren Fahrspur einer Autobahn, unter Umständen den Zugang zum Kraftfahrzeug und damit eine medizinische Versorgung des Fahrers deutlich. Insbesondere bei Herzinfarkten, Schlaganfällen oder ähnlichen Ursachen für die Fahrunfähigkeit des Fahrers, bei denen die weitere Gesundheit des Betroffenen stark von dem Zeitintervall bis zur medizinischen Hilfeleistung abhängt, sollte jede Verzögerung dieser Hilfeleistung, beispielsweise durch eine ungünstige Abstellposition, vermieden werden.

Im erfindungsgemäßen Verfahren wird daher vorgeschlagen, das Kraftfahrzeug nicht an Ort und Stelle zum Stillstand zu bremsen, sondern Umfelddaten des Kraftfahrzeugs derart auszuwerten, dass ein sicherer und erreichbarer Abstellbereich im Fahrzeugumfeld erkannt wird und das Kraftfahrzeug vollständig autonom zu diesem zu ermittelten Abstellbereich geführt wird. Die Umfelddaten können dabei insbesondere aus einer digitalen Karte, die beispielsweise in einem Navigationsgerät vorliegt, und der Ego-Position des Kraftfahrzeugs, die beispielsweise durch ein GPS-System ermittelt wurde, bestimmt werden. Bereits mithilfe dieser Daten können gewisse sichere Abstellbereiche wie ein Seitenstreifen oder ein Parkplatz identifiziert werden. Aus den Kartendaten kann auch geschlossen werden, inwiefern eine medizinische Versorgung in einem Abstellbereich möglich ist. Dabei kann beispielsweise die Zufahrtsmöglichkeit für Rettungsfahrzeuge und die Entfernung zu einem Krankenhaus berücksichtigt werden.

Ergänzend oder alternativ ist es jedoch auch möglich, sichere Abstellbereiche durch Auswertung von Sensordaten, insbesondere Kameradaten, zu ermitteln. Durch bekannte Bildverarbeitungsalgorithmen können beispielsweise Seitenstreifen erkannt werden. Es können jedoch auch Hinweisschilder auf Parkplätze oder Ähnliches erfasst werden. Besonders vorteilhaft werden die Daten einer digitalen Karte und die Daten von Echtzeitsensoren kombiniert, um ein möglichst vollständiges und aktuelles Umfeldmodell zu erhalten.

Während es das primäre Ziel des erfindungsgemäßen Verfahrens ist, das Kraftfahrzeug zu einem sicheren Abstellbereich zu bewegen, in dem das Risiko eines folgenden Unfalls gering ist, ist es auch möglich, durch Nutzung des erfindungsgemäßen Verfahrens eine bessere medizinische Versorgung des Fahrers zu ermöglichen, wenn der Fahrerzustand diese erfordert. Insbesondere wenn das Kraftfahrzeug zusätzliche Sensoren wie Infrarotkameras, die einen Herzschlag erfassen können, Pulssensoren und andere Sensorsysteme zur Erfassung von Körperfunktionen des Fahrers umfasst, kann das Sicherheitssystem auch die Notwendigkeit einer medizinischen Versorgung des Fahrers ermitteln. Insbesondere kann das Sicherheitssystem bereits während des autonomen Fahrbetriebs eine Kommunikationseinrichtung ansteuern und einen Notruf senden, der insbesondere die Zielposition und gespeicherte oder erfasste medizinische Daten des Fahrers umfassen kann.

Während der autonomen Führung des Kraftfahrzeugs ist es zudem möglich, durch Fahrzeug-zu-Fahrzeug-Kommunikation Informationen an weitere Kraftfahrzeuge zu übertragen und diese auf die vorliegende Notsituation aufmerksam zu machen, wodurch unter Umständen ein Ausweichen der weiteren Kraftfahrzeuge und damit ein schnelleres Abstellen des Kraftfahrzeugs erreicht werden kann. Ergänzend ist auch möglich, den autonomen Fahrbetrieb direkt bis zu einem Zielort fortzusetzen, an dem eine medizinische Betreuung des Fahrers möglich ist, insbesondere zu einem Krankenhaus.

Zur Ermittlung des Abstellbereichs kann ein Umfeldmodell für das Umfeld des Kraftfahrzeugs aus den Umfelddaten ermittelt werden, wobei das Umfeldmodell zumindest für Teile der Positionen und/oder Bereiche im Kraftfahrzeugumfeld Sicherheitsgrößen umfasst. Zur Erzeugung eines solchen Umfeldmodells können Sensordaten, die Daten einer digitalen Karte und Daten, die durch Fahrzeug-zu-Fahrzeug bzw. Fahrzeug-zu-Infrastruktur-Kommunikation gewonnen wurden, genutzt werden. Die grundsätzliche Bestimmung eines Umfeldmodells aus Umfelddaten und die Nutzung eines Umfeldmodells als Datenquelle für Fahrerassistenzsysteme sind aus dem Stand der Technik bekannt. Die an sich bekannten Umfeldmodelle können im erfindungsgemäßen Verfahren durch die Berücksichtigung eines weiteren Parameters, nämlich der Sicherheitsgröße, die ein Unfallrisiko beim Abstellen des Kraftfahrzeugs in einem jeweiligen Bereich oder an einer jeweiligen Position beschreibt, ergänzt werden.

Dabei können zur Bestimmung der Sicherheitsgrößen die Bereiche bzw. Positionen durch Auswertung der Umfelddaten Klassen zugeordnet werden, die jeweils eine zugeordnete Sicherheitsgröße aufweisen. Digitale Karten in Kraftfahrzeugen werden insbesondere als Teil von Navigationssystemen genutzt. Solche digitalen Karten umfassen häufig schon Informationen darüber, ob gewisse Positionen bzw. Bereiche bestimmten Fahrspuren, insbesondere Seitenstreifen zugeordnet sind, ob die Bereiche überhaupt befahrbar sind, Teil eines Parkplatzes sind und Ähnliches. Alternativ oder ergänzend können die jeweiligen Bereiche auch durch Auswertung von Sensordaten erkannt werden. Entsprechend ist es möglich, Positionen bzw. Bereiche des Kraftfahrzeugumfelds vorgegebenen Klassen zuzuordnen.

Es ist möglich, diesen Klassen jeweils eine Sicherheitsgröße zuzuordnen. So ist davon auszugehen, dass das Unfallrisiko beim Abstellen des Kraftfahrzeugs auf einem Parkplatz sehr niedrig ist, beim Abstellen auf einem Seitenstreifen etwas höher, beim Abstellen auf einer Fahrspur deutlich höher und beim Abstellen auf einer Gegenfahrspur sehr hoch. Damit können Bereiche oder Positionen, die in einer digitalen Karte bereits gekennzeichnet sind oder erkennbar sind bzw. die aus Sensordaten erkannt werden können, bestimmten Klassen zugeordnet werden, denen wiederum vorgegebene Sicherheitsgrößen zugeordnet sind. Alternativ oder ergänzend können Sicherheitsgrößen für Positionen bzw. Bereiche des Umfeldes direkt in einer digitalen Karte gespeichert sein.

Die so erhaltenen Sicherheitsgrößen können durch weitere Informationen des Umfeldmodells modifiziert werden. Insbesondere kann eine solche Sicherheitsgröße abhängig davon modifiziert werden, wie gut die Abstellposition durch weitere Verkehrsteilnehmer einsehbar ist. So sollte beispielsweise bei einem Abstellen des Kraftfahrzeugs auf einem Seitenstreifen vermieden werden, das Kraftfahrzeug unmittelbar hinter einer Kurve oder einer Bergkuppe abzustellen, da in diesen Fällen die Sichtbarkeit des Kraftfahrzeugs deutlich verringert ist und das Unfallrisiko erhöht. Das Vorhandensein von verdeckenden Objekten, Höhenunterschieden und Kurven ist jedoch im Umfeldmodell ohnehin erfasst. Daher können diese Merkmale zur Anpassung der Sicherheitsgrößen genutzt werden.

Daneben ist es auch möglich, Umfelddaten auszuwerten, um einen Verkehrsfluss zu prognostizieren, also die Wahrscheinlichkeit, dass sich weitere Kraftfahrzeuge nah an bestimmten Bereichen oder Positionen bewegen. Bewegen sich weitere Kraftfahrzeuge nur selten in der Nähe eines Bereichs oder einer Position, so ist dadurch das Unfallrisiko bei einem Abstellen des Kraftfahrzeugs an dieser Position geringer und die zugeordnete Sicherheitsgröße kann daher angepasst werden. Verkehrsflussprognosen können dabei insbesondere mithilfe von Fahrzeug-zu-Infrastruktur-Kommunikation ermittelt werden.

Sind im Umfeldmodell für zumindest Teile der Positionen und/oder Bereiche im Kraftfahrzeugumfeld Sicherheitsgrößen gespeichert, so kann der Abstellbereich aus dem Umfeldmodell als zusammenhängende Vereinigung von Bereichen und/oder Positionen bestimmt werden, deren Sicherheitsgrößen eine vorgegebene Sicherheitsbedingung erfüllen. Die Sicherheitsbedingung kann dabei insbesondere die Sicherheitsgrößen der Positionen bzw. Bereiche mit einem vorgegebenen Grenzwert vergleichen und bei einem Über- bzw. Unterschreiten dieses Grenzwertes kann die Sicherheitsbedingung erfüllt sein. Bei Vorgabe eines festen Grenzwertes für die Sicherheitsgrößen ist es möglich, dass in einige Verkehrssituationen sehr viele oder sehr große Abstellbereiche ermittelt werden können, in anderen jedoch keine. Daher ist es vorteilhaft, wenn die Sicherheitsbedingung die Gesamtverkehrssituation berücksichtigt, beispielsweise indem ein Grenzwert für die Sicherheitsgrößen in Abhängigkeit der Verteilung der Sicherheitsgrößen in der aktuellen Fahrsituation angepasst wird. Alternativ kann eine Mindestgröße für den Abstellbereich vorgegeben und der Abstellbereich derart bestimmt werden, dass die zusammenhängende Vereinigung von Positionen und/oder Bereichen des Kraftfahrzeugumfelds gewählt wird, die die Mindestgröße aufweist und innerhalb der der Mittelwert, Maximalwert oder Minimalwert der Sicherheitsgrößen am größten bzw. am kleinsten ist.

Insbesondere kann bei Ermittlung des Abstellbereichs wenigstens ein zusätzliches Kriterium berücksichtigt werden. Wird der Abstellbereich alleine durch eine Auswertung der Sicherheitsgrößen ermittelt, so ist es häufig möglich, dass sehr große oder sehr viele separate Abstellbereiche ermittelt werden. In diesem Fall ist es vorteilhaft möglich, durch die Anwendung wenigstens eines zusätzlichen Kriteriums einen optimalen Abstellbereich zu bestimmen, ohne dabei die Sicherheitsgröße geringer zu gewichten. Es ist jedoch auch möglich, stets wenigstens ein zusätzliches Kriterium bei der Bestimmung des Abstellbereiches anzuwenden, beispielsweise um eine möglichst kurzzeitige autonome Führung des Kraftfahrzeugs sicherzustellen.

Die Berücksichtigung mehrerer Kriterien kann beispielsweise durch die Berechnung einer Gesamtgröße bestimmt werden, die als gewichtete Summe mehrerer Größen, die die verschiedenen Kriterien beschreiben, berechnet wird. Der Abstellbereich kann anschließend in Abhängigkeit dieser Größe gewählt werden. Es ist jedoch auch möglich, Größen, die die verschiedenen Kriterien abbilden, nicht linear zu verknüpfen oder eine Rangfolge der Kriterien festzulegen. Eine solche Rangfolge kann beispielsweise gebildet werden, indem zunächst alle Bereiche und/oder Positionen ermittelt werden, die eine vorgegebene Sicherheitsbedingung erfüllen und die weiteren Kriterien zur Bestimmung des Abstellbereichs nur Bereiche und/oder Positionen berücksichtigen, die diese Sicherheitsbedingung erfüllen.

Das zusätzliche Kriterium kann insbesondere eine Entfernung des Abstellbereichs von der Ist-Position des Kraftfahrzeugs und/oder eine aus den Umfelddaten ermittelte Versorgungsgröße, die die Verfügbarkeit von medizinischer Versorgung im Abstellbereich beschreibt, auswerten. Häufig ist es vorteilhaft, die autonome Führung des Kraftfahrzeugs auf kurze Strecken zu begrenzen. Daher kann es gewünscht sein, dass die sichere Abstellposition innerhalb einer vorgegebenen Entfernung vom Kraftfahrzeug liegt oder das vorzugsweise naheliegende Abstellbereiche bestimmt werden. Als Versorgungsgröße kann insbesondere eine Entfernung zu einem Krankenhaus oder einem anderen Ort, an dem medizinische Hilfe für den Fahrer verfügbar ist, bestimmt werden. Es ist jedoch auch möglich, aus einer digitalen Karte zu bestimmen, wie schnell ein Abstellbereich durch Einsatzfahrzeuge erreicht werden kann, und die Versorgungsgröße in Abhängigkeit der prognostizierten Zeit zu berechnen. Dabei kann die Berücksichtigung der Versorgungsgröße insbesondere in Abhängigkeit der Fahrerzustandsgröße gewichtet werden, da diese die Notwendigkeit einer schnellen medizinischen Versorgung indizieren kann.

Zur autonomen Längs- und Querführung des Kraftfahrzeugs wird aus den Umfelddaten, der Ego-Position des Kraftfahrzeugs und dem Abstellbereich eine Steuertrajektorie für das Kraftfahrzeug für zumindest einen Abschnitt des Weges zum Abstellbereich bestimmt. Die Bestimmung von Trajektorien für Kraftfahrzeuge zwischen vorgegebenen Punkten ist im Stand der Technik bekannt und soll hier nicht erläutert werden.

Ein wesentliches Problem bei der Bestimmung von Trajektorien für Kraftfahrzeuge ist es, die Bewegung weiterer Verkehrsteilnehmer, insbesondere weiterer Kraftfahrzeuge zu berücksichtigen. Es wird daher erfindungsgemäß in dem Fall, wenn die Fahrbarkeit der Steuertrajektorie von der zukünftigen Bewegung wenigstens eines weiteren Kraftfahrzeugs abhängt, aus den Umfelddaten und der Steuertrajektorie ein Sollfahrmanöver oder eine Solltrajektorie, bei dessen bzw. deren Ausführung durch das weitere Kraftfahrzeug die Steuertrajektorie für das Kraftfahrzeug fahrbar ist, für das weitere Kraftfahrzeug berechnet und das Sollmanöver bzw. die Solltrajektorie beschreibende Fahranweisungsdaten werden durch Ansteuerung einer Kommunikationseinrichtung an das weitere Kraftfahrzeug übertragen. Dabei kann insbesondere eine Fahrzeug-zu-Fahrzeug- oder eine Fahrzeug-zu-Infrastruktur-Kommunikation genutzt werden.

Zusätzlich kann eine Prioritätsinformation übertragen werden. Diese Prioritätsinformation kann dem oder den weiteren Kraftfahrzeugen vermitteln, dass sich das eigene Kraftfahrzeug in einer Notsituation befindet und daher ein möglichst schnelles Erreichen einer Zielposition gewünscht ist. Sind die weiteren Kraftfahrzeugen mit Fahrzeugsystemen ausgestattet, die bei Übertragung einer entsprechenden Prioritätsinformation ausgebildet sind, Sollfahrmanöver durchzuführen bzw. Solltrajektorien zu folgen, so kann damit eine besonders einfache autonome Führung des Kraftfahrzeugs erfolgen und der Abstellbereich kann besonders schnell erreicht werden.

Um eine entsprechende Priorisierung der Fahrt von in Notsituationen autonom geführten Kraftfahrzeugen zu ermöglichen, ist es vorteilhaft, wenn bei Empfang von Fahranweisungsdaten eines weiteren Kraftfahrzeugs sowie einer zugeordneten Prioritätsinformation durch die Kommunikationseinrichtung, bei Erfüllung einer vorgegebenen Ausführbedingung, die zumindest die Prioritätsinformation auswertet, das Sicherheitssystem die Fahrzeugsysteme zur autonomen Durchführung des durch die Fahranweisungsdaten beschrieben Sollfahrmanövers oder zur Führung des Kraftfahrzeugs entlang der durch die Fahranweisungsdaten beschriebenen Solltrajektorie ansteuert und/oder eine Hinweiseinrichtung zur Gabe eines Hinweises an den Fahrer ansteuert, um ihn zur Durchführung des Sollfahrmanövers oder zur Führung des Kraftfahrzeugs entlang der Solltrajektorie anzuleiten.

Alternativ oder ergänzend ist es möglich, dass eine Kommunikationseinrichtung des Kraftfahrzeugs zur Übertragung der Steuertrajektorien an wenigstens ein weiteres Kraftfahrzeug angesteuert wird. Insbesondere kann die Steuertrajektorie an alle weiteren Kraftfahrzeuge im Umfeld des Kraftfahrzeugs übertragen werden und mit einer Prioritätsinformation ergänzt werden.

Damit ist es möglich, dass Fahrzeugsysteme der weiteren Kraftfahrzeuge erkennen, dass sich das Kraftfahrzeug in einer Notlage befindet und deshalb autonom geführt wird, und dass die weiteren Kraftfahrzeuge selbstständig überprüfen können, ob ein Konflikt zwischen der eigenen voraussichtlichen Trajektorie und der Steuertrajektorie des autonom geführten Kraftfahrzeugs vorliegt. Die weiteren Kraftfahrzeuge können dann beispielsweise einen Hinweis an den Fahrer des weiteren Kraftfahrzeugs geben oder autonom in den Fahrbetrieb eingreifen, um Konflikte mit der Steuertrajektorie des autonom geführten Kraftfahrzeugs zu vermeiden.

Bei Erfüllung der Auslösebedingung kann eine Kommunikationseinrichtung des Kraftfahrzeugs zur Übertragung eines automatischen Notrufes angesteuert werden. Die Kommunikationseinrichtung kann beispielsweise ein im Kraftfahrzeug integriertes oder mit dem Kraftfahrzeug verbundenes Mobiltelefon sein, es ist jedoch auch möglich, den Notruf über Fahrzeug-zu-Fahrzeug- oder Fahrzeug-zu-Infrastruktur-Kommunikation abzugeben. Der Notruf kann insbesondere an ein automatisches System gesendet werden, um ein Einsatzfahrzeug, insbesondere einen Krankenwagen, zu rufen. Ergänzend können auch Fahrerzustandsgrößen übertragen werden, um bereits eine Vordiagnose des Fahrers zu ermöglichen und es können Informationen an ein naheliegendes Krankenhaus übertragen werden.

Vorteilhaft wird zusätzlich zum automatischen Notruf eine Ortsinformation übertragen, die den Ort des Abstellbereichs beschreibt. Damit ist es insbesondere möglich, Einsatzfahrzeuge bereits zu dem Abstellbereich zu rufen, wenn das Kraftfahrzeug selbst noch auf dem Weg zum Abstellbereich ist.

Es ist möglich, dass aus den Daten des Fahrerzustandserfassungsmittels nicht eindeutig ermittelbar ist, ob ein Fahrer unfähig zur Führung des Kraftfahrzeugs ist. Es ist damit vorteilhaft, wenn bei Erfüllung der Auslösebedingung vor Ausführung der weiteren Schritte ein Prüfschritt durchgeführt wird, in dem eine Hinweiseinrichtung zur Ausgabe einer Aufforderung zu einer Bedieneingabe an den Fahrer angesteuert wird, und das Verfahren abgebrochen wird, wenn die Bedieneingabe während eines vorgegebenen Zeitintervalls nach der Aufforderung erfasst wird. Damit ist es im erfindungsgemäßen Verfahren möglich, bereits dann, wenn die Daten des Fahrerzustandserfassungsmittels auf eine Fahrunfähigkeit des Fahrers hinweisen, einen Fahrer darauf aufmerksam zu machen, dass eine Übernahme der Fahrzeugführung durch das Sicherheitssystem bevorsteht, und ihm Gelegenheit zu geben, dies durch eine Bedieneingabe zu unterbinden. Damit kann sichergestellt werden, dass eine Fahrübernahme durch das Sicherheitssystem erst erfolgt, wenn ein Fahrer auch nach Gabe eines entsprechenden Hinweises keine erforderliche Bedieneingabe durchführt.

Es ist in Einzelfällen möglich, dass im erfindungsgemäßen Verfahren ein autonomer Fahrbetrieb eingeleitet wird, obwohl der Fahrer tatsächlich noch zur Führung des Kraftfahrzeugs fähig wäre, oder dass der Fahrer während der autonomen Führung des Kraftfahrzeugs beispielsweise aus einer Bewusstlosigkeit erwacht und damit wieder zur Führung des Fahrzeugs fähig ist. Daher ist es vorteilhaft, wenn in dem Fall, wenn eine vorgegebene Rückübergabebedingung während der autonomen Längs- und Querführung des Kraftfahrzeugs erfüllt ist, die insbesondere eine Bedienung eines Bedienelements auswertet, eine Rückübergabe der Fahrzeugführung an den Fahrer erfolgt und die autonome Längs- und Querführung beendet wird.

Es ist auch möglich, dass andere Abbruchbedingungen vorliegen, bei Vorliegen derer ein Abbruch der autonomen Längs- und Querführung des Kraftfahrzeugs notwendig ist. So ist es möglich, dass aufgrund einer Änderung des Umfelds kein sicherer Abstellbereich mehr erreicht werden kann, dass ein Sensordefekt vorliegt, wodurch keine sichere autonome Führung des Kraftfahrzeugs möglich ist, dass Fehler bei der Konsistenzprüfung der Umfelddaten festgestellt werden oder Ähnliches. Daher kann, wenn eine vorgegebene Abbruchbedingung während der autonomen Längs- und Querführung des Kraftfahrzeugs erfüllt ist, das Sicherheitssystem zur Bremsung des Kraftfahrzeugs auf der momentan befahrenen Fahrspur bis zum Stillstand ausgebildet sein.

Die zur autonomen Längs- und Querführung des Kraftfahrzeugs angesteuerten Fahrzeugsysteme können ein Bremssystem und/oder einen Motor und/oder eine Lenkung und/oder ein vorzugsweise automatisches Getriebe des Kraftfahrzeugs umfassen.

Das erfindungsgemäße Verfahren kann vorteilhaft in Kraftfahrzeugen genutzt werden, die ein Fahrerassistenzsystem zur autonomen oder teilautonomen Führung des Kraftfahrzeugs umfassen, wobei das Verfahren auch durchgeführt wird, wenn das Fahrerassistenzsystem eine Hinweiseinrichtung zur Gabe eines Rückübernahmehinweises an den Fahrer ansteuert und innerhalb eines vorgegebenen Zeitintervalls und/oder nach einer vorgegebenen Anzahl von Wiederholungen des Rückübernahmehinweises keine vorgegebene Bedieneingabe erfasst wird. Das autonome Abstellen des Kraftfahrzeugs in einem sicheren Abstellbereich soll also auch dann erfolgen, wenn ein Fahrer nicht fähig oder willens ist, die Fahrzeugführung von einem Fahrerassistenzsystem zu übernehmen.

Nach Erfüllung der Auslösebedingung kann wenigstens eine Hinweiseinrichtung zur Gabe eines Hinweises an weitere Verkehrsteilnehmer angesteuert werden. Diese Hinweiseinrichtung kann insbesondere eine Warnblinkanlage sein. Die Aktivierung der Hinweiseinrichtung erfüllt zum einen den Zweck, andere Verkehrsteilnehmer auf die autonome Führung des Kraftfahrzeugs hinzuweisen, zum anderen werden andere Verkehrsteilnehmer darauf hingewiesen, zusätzlichen Abstand zu halten, wodurch dem Kraftfahrzeug zusätzlich Manövrierraum zur Verfügung gestellt wird, wodurch ein schnelleres Abstellen des Kraftfahrzeugs im sicheren Abstellbereich möglich ist.

Daneben betrifft die Erfindung ein Kraftfahrzeug, umfassend ein Fahrerzustandserfassungsmittel zur Erfassung eines Fahrerzustandes und ein Sicherheitssystem, dadurch gekennzeichnet, dass das Sicherheitssystem zur Durchführung einer der Ausführungsformen des oben beschriebenen erfindungsgemäßen Verfahrens ausgebildet ist.

Weitere Vorteile und Einzelheiten der Erfindung ergeben sich aus den folgenden Ausführungsbeispielen sowie den zugehörigen Zeichnungen. Dabei zeigen:
- Fig. 1: ein Ablaufdiagramm eines Ausführungsbeispiels eines erfindungsgemäßen Verfahrens,
- Fig. 2: eine Verkehrssituation,
- Fig. 3: eine weitere Verkehrssituation,
- Fig. 4: ein Ablaufdiagramm zum Vorgehen beim Empfang von Solltrajektorien,
- Fig. 5: ein Ablaufdiagramm zur Berücksichtigung empfangener Steuertrajektorien weiterer Kraftfahrzeuge, und
- Fig. 6: ein erfindungsgemäßes Kraftfahrzeug.

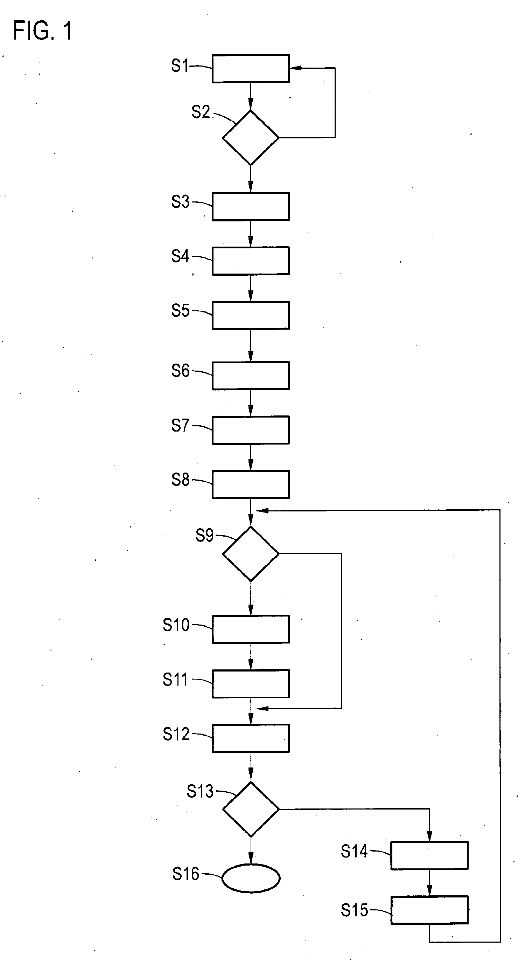

Fig. 1 zeigt ein Ablaufdiagramm eines Ausführungsbeispiels für ein Verfahren zum Betrieb eines Sicherheitssystems eines Kraftfahrzeugs. In Schritt S1 werden im laufenden Fahrbetrieb die Daten eines Fahrerzustandserfassungsmittels erfasst und eine Fahrerzustandsgröße bestimmt. Das Fahrerzustandserfassungsmittel kann dabei eine Infrarotkamera sein, aus deren Bilddaten mittels einer Bildverarbeitungseinrichtung ein Herzschlag und/oder Puls des Fahrers extrahiert werden kann. Es können auch die Sitzposition, ein Lidschlag des Fahrers, die Pupillenbewegung sowie die Benutzung von Bedienelementen, insbesondere der Lenkung erfasst werden. Sind an einem Sitz oder am Gurt Pulssensoren vorgesehen, so können auch deren Daten erfasst werden.

Aus den ermittelten Handlungen und Körperfunktionen des Fahrers wird eine Fahrerzustandsgröße bestimmt, die einem Fahrerzustand und damit eine Fahrfähigkeit des Fahrers beschreibt. Hierzu wertet das Sicherheitssystem mehrere Bedingungen aus, die jeweils typische Daten des Fahrerzustandserfassungsmittels erkennen, die auf einen Zustand des Fahrers hinweisen, der zu einer Fahrunfähigkeit des Fahrers führen kann. Ein möglicher Grund für die Fahrunfähigkeit des Fahrers sind Herzrhythmusstörungen. Zur Erkennung von Herzrhythmusstörungen kann im Kraftfahrzeug ein Pulssensor im Sitz oder am Gurt vorgesehen sein, es ist jedoch auch möglich, den Herzschlag und/oder Puls mithilfe der Bilddaten einer Infrarotkamera zu erkennen. Weitere typische Daten können sehr plötzliche Lidbewegungen oder keine Lidbewegungen, Änderungen der Sitzposition des Fahrers und/oder bestimmte Bewegungsmuster beschreiben. Diese typischen Daten können auf Bewusstlosigkeit, kardiologische Notfälle, Epilepsie, Zuckerschock, Schlaganfall oder Migräneanfälle hinweisen. Für die einzelnen Kriterien wird jeweils ein Wahrscheinlichkeitswert für die Fahrunfähigkeit bestimmt. Aus einer gewichteten Summe der Einzelwahrscheinlichkeiten wird anschließend der Fahrerzustandswert berechnet, der damit eine Wahrscheinlichkeit für die Fahrunfähigkeit des Fahrers beschreibt.

In Schritt S2 wird zunächst überprüft, ob die Auslösebedingung erfüllt ist. Hierfür wird die in Schritt S1 ermittelte Fahrerzustandsgröße mit einem vorgegebenen Grenzwert verglichen. Wird in Schritt S2 ermittelt, dass die Auslösebedingung nicht erfüllt ist, so kann der Fahrbetrieb normal fortgesetzt werden, wobei in bestimmten Abständen die Erfassung von Fahrerzustandsgrößen wiederholt wird.

Wurde in Schritt S2 ermittelt, dass die Auslösebedingung erfüllt ist, so werden in Schritt S3 Umfelddaten ermittelt. Zur Erfassung der Umfelddaten wird die Ego-Position des Kraftfahrzeugs durch Auswertung von Positionsinformationen eines Positionssensors bestimmt und die Umfelddaten werden einer im Kraftfahrzeug gespeicherten digitalen Karte entnommen. Die Informationen der digitalen Karte werden hierbei durch weitere Informationen ergänzt, die durch Umfeldsensoren des Kraftfahrzeugs, insbesondere Kameras, erfasst werden.

In Schritt S4 wird aus den der digitalen Karte entnommenen Umfelddaten und den durch die Sensoren umfassten Umfelddaten ein Umfeldmodell erstellt oder aktualisiert, das die gesammelten Umfelddaten fusioniert. Das Umfeldmodell umfasst dabei zumindest die Straßenführung sowie die Positionen und voraussichtlichen Bewegungen weiterer Kraftfahrzeuge. Wesentlich ist, dass für zumindest Teile der Positionen bzw. Bereiche des Umfelds im Umfeldmodell Sicherheitsgrößen enthalten sind. Diese Sicherheitsgrößen werden bestimmt, indem Bereiche bzw. Positionen des Umfelds gewissen Klassen zugeordnet werden. So werden Bereiche wie Fahrspuren, Standstreifen, Parkplätze, befahrbare Bereiche außerhalb der Fahrbahn und Ähnliches durch Auswertung der Umfelddaten als Mitglieder von Klassen erkannt und die Bereiche bzw. Positionen des Umfelds werden soweit möglich den entsprechenden Klassen zugeordnet. Für jede dieser Klassen ist im Sicherheitssystem eine Sicherheitsgröße vorgegeben. So kann ein Parkplatz als besonders sicher klassifiziert werden, da ein Unfall bei einem Abstellen des Kraftfahrzeugs auf dem Parkplatz besonders unwahrscheinlich ist. Andererseits sind die Fahrspuren, insbesondere die Fahrspuren in Gegenrichtung, als besonders unsicher klassifiziert, da ein Abstellen des Kraftfahrzeugs auf einer Fahrspur mit deutlich höherer Wahrscheinlichkeit zu einem Unfall führt. Die Sicherheitsgrößen, die durch diese Klassifizierung für die Positionen bzw. Bereich im Kraftfahrzeugumfeld bestimmt wurden, können zudem modifziert werden. Insbesondere wertet das Sicherheitssystem aus, ob eine Position oder ein Bereich für weitere Verkehrsteilnehmer gut oder weniger gut einsehbar ist. So wird die Sicherheitsgröße für Positionen, die hinter einer Bergkuppe oder einer Kurve liegen, in Richtung einer geringeren Sicherheit modifiziert.

In Schritt S6 wird der Abstellbereich aus dem Umfeldmodell als zusammenhängende Vereinigung von Bereichen bestimmt, deren Sicherheitsgrößen eine vorgegebene Sicherheitsbedingung erfüllen. Zudem wird bei der Ermittlung des Abstellbereichs die Entfernung des Abstellbereichs von der Ist-Position des Kraftfahrzeugs berücksichtigt. Beschreibt die Fahrerzustandsgröße einen akuten Notfall, in dem der Behandlungszeitpunkt des Fahrers zeitkritisch ist, so wird zudem bei der Bestimmung der Abstellposition eine Versorgungsgröße berücksichtigt, die die Verfügbarkeit von medizinischer Versorgung im Abstellbereich beschreibt. Die Versorgungsgröße wertet hierbei die Entfernung zum nächstliegenden Behandlungsort, also insbesondere zum nächstliegenden Krankenhaus aus, es wird jedoch auch die Verkehrsführung zwischen Behandlungsort und Abstellbereich sowie die Verkehrssituation berücksichtigt. Dabei ist es insbesondere möglich, dass in Abhängigkeit der Sicherheitsgrößen sowie der genannten zusätzlichen Kriterien als Abstellbereich direkt ein Bereich in unmittelbarer Nachbarschaft zu einem Behandlungsort bestimmt wird.

Aus den Sicherheitsgrößen und durch Auswertung der zusätzlichen genannten Kriterien wird ein Abstellbereich bestimmt, in dem ein Bereich mit einer vorgegebenen Mindestgröße ausgewählt wird, für den eine Verknüpfung, insbesondere eine gewichtete Summe, der Sicherheitswerte und der durch die zusätzlichen Kriterien ausgewerteten Größen, einen maximalen bzw. minimalen Wert annimmt. Dabei werden für einzelne ausgewertete Größen Zusatzbedingungen berücksichtigt, so dass nur Bereiche und Positionen innerhalb einer gewissen maximalen Entfernung berücksichtigt werden und der Sicherheitswert keines Bereichs und keiner Position im Abstellbereich einen vorgegebenen Wert unter- bzw. überschreitet.

Die Schritte S3 bis S6 werden im gezeigten Ausführungsbeispiel erst nach Erfüllung der Auslösebedingung durchgeführt. Die Durchführung dieser Schritte ist jedoch prinzipiell von der Auslösebedingung unabhängig, weshalb diese Schritte auch bereits vor Ermittlung der Erfüllung der Auslösebedingung in Schritt S2 durchgeführt werden können.

In Schritt S7 wird eine Kommunikationseinrichtung zur Sendung eines Notrufes angesteuert. Da in Schritt S6 bereits der Abstellbereich ermittelt wurde, kann im Schritt S7 der Ort des Abstellbereichs mit dem Notruf übertragen werden. Durch das Senden des Notrufs in Schritt S7, das heißt bereits am Beginn des autonomen Fahrbetriebs, vor Erreichen der Abstellposition, kann die Wartezeit im Abstellbereich bis zum Eintreffen von Hilfe verkürzt werden. Anschließend wird in Schritt S8 eine Steuertrajektorie zur autonomen Längsund Querführung des Kraftfahrzeugs aus den Umfelddaten, der Ego-Position sowie weiteren Ego-Daten des Kraftfahrzeugs und dem Abstellbereich für zumindest einen Abschnitt des Weges zum Abstellbereich bestimmt. Die Bestimmung der Trajektorie kann mit einem der zahlreichen bekannten Verfahren zur Trajektorienbestimmung erfolgen, beispielsweise einem "Best First"-Verfahren wie dem A*-Verfahren.

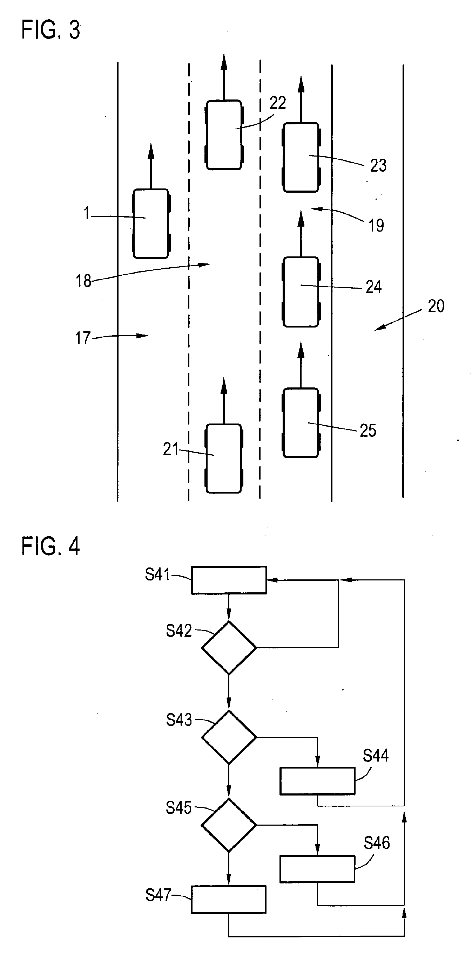

In Schritt S9 wird überprüft, ob die Fahrbarkeit der Trajektorie von der zukünftigen Bewegung wenigstens eines weiteren Kraftfahrzeugs abhängt. Hierzu kann das Umfeldmodell Dynamikmodelle für weitere Kraftfahrzeuge umfassen, aus denen mögliche Bewegungen für die weiteren Kraftfahrzeuge bestimmt werden. Kommt es zu einem Überlapp des Bewegungskorridors eines der weiteren Kraftfahrzeuge mit der Steuertrajektorie des eigenen Kraftfahrzeugs, so ist die Bewegung entlang der vorausberechneten Steuertrajektorie unmöglich. Daher wäre es möglich, die Trajektorie des eigenen Kraftfahrzeugs kontinuierlich an die Bewegungen der weiteren Kraftfahrzeuge anzupassen. Da die autonome Führung des Kraftfahrzeugs aber aufgrund einer Notfallsituation erfolgt, soll eine möglichst einfache und schnelle Führung des Kraftfahrzeugs zur Abstellposition erfolgen. Deshalb wird bei Feststellung eines potenziellen Konflikts zwischen dem Bewegungskorridor eines weiteren Kraftfahrzeugs und der Steuertrajektorie, also wenn in Schritt S9 eine Abhängigkeit der Fahrbarkeit der eigenen Steuertrajektorie von der Bewegung des wenigstens einen weiteren Kraftfahrzeugs festgestellt wird, in Schritt S10 eine Solltrajektorie für das weitere Kraftfahrzeug bestimmt und diese in Schritt S11 an das weitere Kraftfahrzeug übertragen. Zusätzlich zu der Steuertrajektorie wird eine Prioritätsinformation übertragen, die dem weiteren Kraftfahrzeug übermittelt, dass sich das eigene Kraftfahrzeug in einer Notsituation befindet, da der Fahrer nicht fähig ist, das Kraftfahrzeug zu führen. Sofern das oder die weiteren Kraftfahrzeuge ausgebildet sind, die übertragene Prioritätsinformation und die übertragenen Fahranweisungsdaten, die die Solltrajektorie beschreiben, auszuwerten, wie es mit Bezug auf Fig. 4 beschrieben ist, wird durch das Übertragen von Solltrajektorien mit einer zugeordneten Prioritätsinformation erreicht, das weiteren Kraftfahrzeugen Solltrajektorien vorgeschrieben werden können, die eine Beeinträchtigung der Führung des eigenen Kraftfahrzeugs entlang der Steuertrajektorie verhindern.

In Schritt S12 wird mit der Ausführung der Steuertrajektorie begonnen, indem das Sicherheitssystem Fahrzeugsysteme wie die Lenkung, den Motor, die Bremsen sowie das automatische Getriebe des Kraftfahrzeugs ansteuert, um das Kraftfahrzeug entlang der Steuertrajektorie zu führen.

Nach einem vorgegebenen Zeitintervall wird in Schritt S13 überprüft, ob der Abstellbereich bereits erreicht ist. Ist der Abstellbereich in Schritt S13 erreicht, so kann in Schritt S16 das Kraftfahrzeug im Abstellbereich sicher abgestellt werden.

Ist der Abstellbereich in Schritt S13 nicht erreicht, so werden in Schritt S14, wie bereits in Schritt S3 beschrieben, erneut Umfelddaten erfasst und in Schritt S15 wird mit den in Schritt S14 ermittelten Umfelddaten das Umfeldmodell aktualisiert und soweit notwendig eine neue Steuertrajektorie berechnet bzw. die Steuertrajektorie aktualisiert. Eine Aktualisierung der Steuertrajektorie ist dann notwendig, wenn eine bisherige Steuertrajektorie nicht länger fahrbar ist. Dies ist insbesondere dann möglich, wenn weitere Kraftfahrzeuge nicht auf eine Übertragung der Solltrajektorie reagieren und damit bei einer Führung des Kraftfahrzeugs auf der vorherigen Steuertrajektorie eine Kollision mit dem weiteren Kraftfahrzeug drohen würde. Eine Neuberechnung oder Aktualisierung der Steuertrajektorie ist auch dann notwendig, wenn zuvor nur eine Steuertrajektorie für einen Abschnitt des Weges zum Abstellbereich berechnet wurde und das Ende dieses Abschnitts erreicht oder fast erreicht wurde. Nach der Anpassung der Trajektorie oder der Ermittlung der Tatsache, dass keine Anpassung der Trajektorie notwendig ist, kann das Verfahren mit Schritt S9 fortgesetzt werden, in dem erneut überprüft wird, ob die Fahrbarkeit der Trajektorie von der zukünftigen Bewegung eines weiteren Kraftfahrzeugs abhängig ist.

Das beschriebene Verfahren kann leicht um weitere Merkmale erweitert werden. So ist es insbesondere möglich, in Schritt S2 bei Feststellung, dass die Auslösebedingung erfüllt ist, eine Hinweiseinrichtung zur Gabe eines Hinweises an weitere Verkehrsteilnehmer anzusteuern. Das Verfahren kann zudem derart erweitert werden, dass eine Rückübernahme der Fahrzeugführung durch den Fahrer während des autonomen Fahrbetriebs möglich ist. Hierzu kann beispielsweise nach Schritt S13 ein weiterer Schritt eingefügt werden, in dem geprüft wird, ob eine vorgegebene Bedieneingabe durch einen Benutzer erfolgt ist. Bei Vorliegen dieser Bedieneingabe kann das Verfahren erneut ab Schritt S1 fortgesetzt werden, das heißt, die Führung des Kraftfahrzeugs kann einen Fahrer rückübergeben werden.

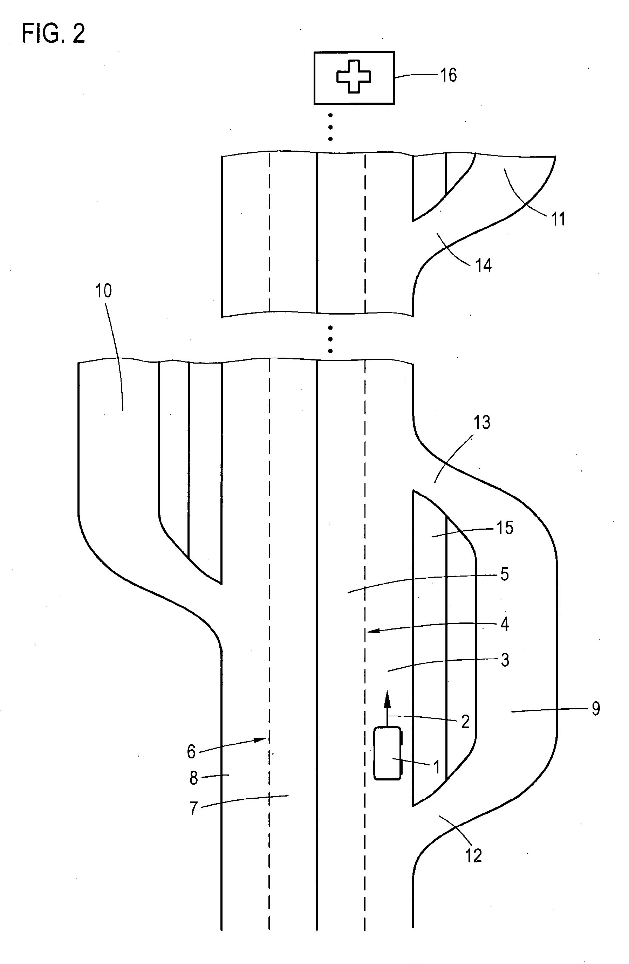

Fig. 2 zeigt eine Verkehrssituation, in der das Kraftfahrzeug 1 in die durch Pfeil 2 angezeigte Richtung auf der Fahrspur 3 der Fahrbahn 4 fährt. Durch Auswertung der Fahrerzustandsgröße wird durch das Sicherheitssystem des Kraftfahrzeugs 1 ermittelt, dass der Fahrer unfähig zur Führung des Kraftfahrzeugs ist.

Durch Auswertung der Umfelddaten, die aus einer digitalen Karte und den Fahrzeugsensoren gewonnen sind, werden im Umfeldmodell eine Vielzahl von Bereichen identifiziert. In der gezeigten Situation werden die beiden Fahrspuren 3 und 5 der Fahrbahn 4 sowie die beiden Fahrspuren 7 und 8 der Fahrbahn 6, die in die Gegenrichtung verläuft, erkannt. Des Weiteren werden die drei Parkplätze 9, 10 und 11, der Seitenstreifen 15 sowie das Krankenhaus 16 erkannt. Den erkannten Bereichen 7 und 8, also den Fahrspuren in Gegenrichtung wird eine sehr hohe Sicherheitsgröße, also ein sehr hohes Unfallrisiko beim Abstellen des Kraftfahrzeugs in diesen Bereichen zugeordnet, den Fahrspuren 3, 5 in die Fahrtrichtung des Kraftfahrzeugs eine hohe Sicherheitsgröße, dem Seitenstreifen 15 eine mittlere Sicherheitsgröße und den Parkplätzen 9, 10, 11 sowie einem dem Krankenhaus 16 zugeordneter Parkplatz eine niedrige Sicherheitsgröße zugeordnet, da in diesen Bereichen bei Abstellen des Kraftfahrzeugs nicht mit einem Unfall zu rechnen ist. Damit wird zunächst für die Bereiche 9, 10, 11 und 16 eine gleiche Sicherheitsgröße ermittelt. Zeigt die Fahrerzustandsgröße an, dass der Fahrer dringend medizinischer Hilfe bedarf, so wird das Kraftfahrzeug 1 autonom zum Krankenhaus 16 gesteuert. Gibt es kein klares Indiz für die Dringlichkeit der medizinischen Hilfe oder ist das Krankenhaus 16 sehr weit entfernt, ist es andererseits sehr vorteilhaft, die Zeit, während der das Kraftfahrzeug 1 autonom gesteuert ist, zu minimieren. Daher ist ein weiteres Kriterium zur Bestimmung des Abstellbereichs die Entfernung der Bereiche mit sehr niedriger Sicherheitsgröße von der Ego-Position des Kraftfahrzeugs 1. Der Parkplatz 9 befindet sich am nähesten an der Ego-Position des Kraftfahrzeugs, der Parkplatz 11 ist am weitesten von der Ego-Position des Kraftfahrzeugs entfernt. Da das Kraftfahrzeug 1 jedoch die Einfahrt 12 des Parkplatzes 9 bereits passiert hat, müsste für eine Einfahrt in Parkplatz 9 die Ausfahrt 13 des Parkplatzes 9 genutzt werden. Ein solches Einfahren in den Parkplatz entgegen der Fahrtrichtung stellt jedoch ein erhebliches Sicherheitsrisiko dar. Daher wird die Sicherheitsgröße für Parkplatz 9 deutlich erhöht, wodurch die Sicherheitsgröße des Parkplatzes 9 sogar über die Sicherheitsgröße für die Fahrspuren 3 und 5 gehoben wird und Parkplatz 9 bei der Bestimmung des Abstellbereiches nicht berücksichtigt wird. Für eine Einfahrt in Parkplatz 10 wäre zumindest eine Überqueren der Gegenfahrbahn 6 sowie potenziell auch ein Einfahren in Parkplatz 10 entgegen der Fahrtrichtung notwendig. Deshalb wird auch die Sicherheitsgröße von Parkplatz 10 deutlich erhöht. Damit verbleibt als Bereich mit der kleinstmöglichen Sicherheitsgröße Parkplatz 11. Befindet sich Parkplatz 11 in nicht zu großer Entfernung von der Ego-Position des Kraftfahrzeugs 1, wird Kraftfahrzeug 1 daher autonom durch Einfahrt 14 auf Parkplatz 11 gesteuert und dort abgestellt. Das zusätzliche Kriterium, dass der Abstellbereich möglichst nah an der Ego-Position des Kraftfahrzeugs 1 sein soll, führt dazu, dass die der Einfahrt 14 nächstliegende Parkbucht des Parkplatzes 11 genutzt wird.

Wie bereits erwähnt, ist neben der Sicherheit des Abstellbereichs auch die Entfernung zum Abstellbereich ein wesentliches Kriterium zur Bestimmung des Abstellbereichs. Daher wird der Abstellbereich im Sicherheitssystem des Kraftfahrzeugs 1 durch Auswertung einer gewichteten Summe der Sicherheitsgröße des jeweiligen Bereichs und der Entfernung des Bereichs zu dem Kraftfahrzeug 1 bestimmt. Ist nun Parkplatz 11 vom Kraftfahrzeug 1 weit entfernt, so kann die Bestimmung dieser gewichteten Summe dazu führen, dass der Seitenstreifen 15, der wesentlich näher an der Ego-Position des Kraftfahrzeugs 1 liegt, jedoch eine etwas größere Sicherheitsgröße aufweist, als Abstellbereich bestimmt wird. In diesem Fall wird ein möglichst nahe am Kraftfahrzeug 1 gelegener Bereich des Seitenstreifens 15 als Abstellbereich gewählt, so dass das Kraftfahrzeug 1 in diesem Bereich zum Stillstand kommen kann.

Die Sicherheitsgröße des Seitenstreifens 15 kann zudem noch lokal modifiziert werden, indem die Sicherheitsgröße für den Seitenstreifen 15 hinter Hindernissen, Kurven und Bergkuppen erhöht wird, da diese Bereiche schlecht einsehbar sind und damit das Risiko bei einem Abstellen des Kraftfahrzeugs in diesen Bereichen erhöht ist.

Fig. 3 zeigt eine Verkehrssituation, in der das Kraftfahrzeug 1 eine Fahrzeug-zu-Fahrzeug-Kommunikation nutzt, um nach der Ermittlung der Auslösebedingung das Kraftfahrzeug 1 möglichst bald im Abstellbereich auf Seitenstreifen 20 abzustellen. Das Kraftfahrzeug 1 bewegt sich zu dem Zeitpunkt, zu dem die Fahruntüchtigkeit des Fahrers festgestellt wird, auf einer Überholspur 17 einer Autobahn. Während der autonomen Fahrt des Kraftfahrzeugs zum Abstellbereich auf dem Seitenstreifen 20 ist es damit notwendig, die mittlere Spur 18 sowie die rechte Spur 19 zu überqueren. Auf der mittleren Spur 18 bewegen sich die Kraftfahrzeuge 21 und 22, auf der rechten Spur 19 die Kraftfahrzeuge 23, 24 und 25. Damit ist eine typische Fahrsituationen auf Autobahnen gezeigt, bei der auf der rechten Spur 19 und der mittleren Spur 18 die Verkehrsdichte hoch ist. In solchen Fällen können lange Zeiträume notwendig sein, um ein Kraftfahrzeug auf den Seitenstreifen 20 zu bewegen.

Um ein schnelleres Abstellen des Kraftfahrzeugs 1 in dieser Situation zu ermöglichen, kann das Sicherheitssystem eine Kommunikationseinrichtung des Kraftfahrzeugs 1 ansteuern, um Sollmanöver an die Kraftfahrzeuge 21, 22, 23, 24 und 25 zu übermitteln. Mit dem Sollmanöver kann insbesondere eine Prioritätsinformation übertragen werden, die anzeigt, dass sich das Kraftfahrzeug 1 in einer Notsituation befindet, wodurch veranlasst wird, dass die Kraftfahrzeuge 21, 22, 23, 24 und 25 das als Fahranweisungsdaten übertragene Sollfahrmanöver durchführen.

Fig. 4 zeigt die Verfahrensschritte, um bei Übertragen einer Solltrajektorie mit zugeordneter Prioritätsinformation eine entsprechende Steuerung des Fahrzeugs entlang der Solltrajektorie zu veranlassen. Das gezeigte Verfahren lässt sich weitgehend auf den Fall übertragen, dass als Fahranweisungsdaten ein Sollfahrmanöver übertragen wird.

In Schritt S41 befindet sich das Kraftfahrzeug im normalen Fahrbetrieb und empfängt Daten über eine Kommunikationseinrichtung.

In Schritt S42 wird überprüft, ob die empfangenen Kommunikationsdaten Fahranweisungsdaten und eine den Fahranweisungsdaten zugeordneten Prioritätsinformation umfassen. Wurden keine Fahranweisungsdaten und/oder keine Prioritätsinformationen empfangen, so wird das Verfahren ab Schritt S41 fortgesetzt.

Wurden jedoch Fahranweisungsdaten und eine Prioritätsinformation empfangen, so wird in Schritt S43 überprüft, ob die Prioritätsinformation einen Grenzwert übersteigt. Im erfindungsgemäßen Verfahren wird nur eine Notfallpriorität genutzt, die anzeigt, dass der Fahrer unfähig ist, das Kraftfahrzeug zu führen, welche unabhängig von dem Empfang anderer Solltrajektorien mit anderen Prioritätsinformationen stets zur Durchführung der Solltrajektorie führen soll. Die Auswertung der Prioritätsinformation ist vorteilhaft, da auch eine Vielzahl weiterer Fahrzeugsysteme Solltrajektorien übertragen können.

Ist die Prioritätsinformation nicht ausreichend hoch, kann in Schritt S44 eine Antwort an das die Fahranweisungsdaten sendende Kraftfahrzeug übertragen werden, um dieses darauf hinzuweisen. Anschließend wird das Verfahren ab Schritt S41 fortgesetzt. Wird jedoch in Schritt S43 ermittelt, dass die Prioritätsinformation ausreichend hoch ist, wird in Schritt S45 die durch die Fahranweisungsdaten beschriebene Solltrajektorie überprüft, wobei anhand diverser aus den Umfelddaten und den Egodaten des Kraftfahrzeugs ermittelter Randbedingungen die Fahrbarkeit der Solltrajektorie überprüft wird. Hierzu sind zahlreiche Verfahren bekannt, weshalb dies nicht näher beschrieben werden soll. Ist die Solltrajektorie für das empfangende Fahrzeug nicht fahrbar, so wird in Schritt S46 eine entsprechende Nachricht an das ursprünglich sendende Kraftfahrzeug übermittelt. Eine Nichtfahrbarkeit der Trajektorie ist insbesondere dann möglich, wenn das sendende Kraftfahrzeug über unvollständige Umfeldinformationen verfügt oder es das empfangende Kraftfahrzeug betreffende Parameter nicht korrekt bei der Solltrajektorienbestimmung berücksichtigt. Anschließend wird das Verfahren ab Schritt S41 vorgesetzt.

Wurde jedoch in Schritt S43 ermittelt, dass die Prioritätsinformation ausreichend hoch ist und in Schritt S45, dass die Solltrajektorie fahrbar ist, so wird in Schritt S47 das empfangende Kraftfahrzeug entlang der Solltrajektorie geführt. Hierzu werden durch die Sicherheitssystem oder ein weiteres Fahrerassistenzsystem Fahrzeugsysteme wie die Steuerung, die Bremsen, der Motor und/oder das automatisches Getriebe angesteuert. Währenddessen wird stetig die Fahrbarkeit der Solltrajektorie überwacht und die Solltrajektorie falls notwendig angepasst.

Nach Fahren der Solltrajektorie in Schritt S47 kann die Fahrzeugführung an den Fahrer rückübergeben und das Verfahren in Schritt S41 mit dem Empfang weiterer Daten durch Kommunikationseinrichtung fortgesetzt werden.

Wie bereits erwähnt ist es möglich, dass das Kraftfahrzeug, statt selbst zu überprüfen, ob die Steuertrajektorie in Konflikt mit möglichen Bewegungen weiterer Kraftfahrzeuge ist, und anschließend Solltrajektorien oder Sollmanöver für diese weiteren Kraftfahrzeuge zu ermitteln, die Steuertrajektorie und die Prioritätsinformation an einige oder alle der weiteren Kraftfahrzeuge überträgt.

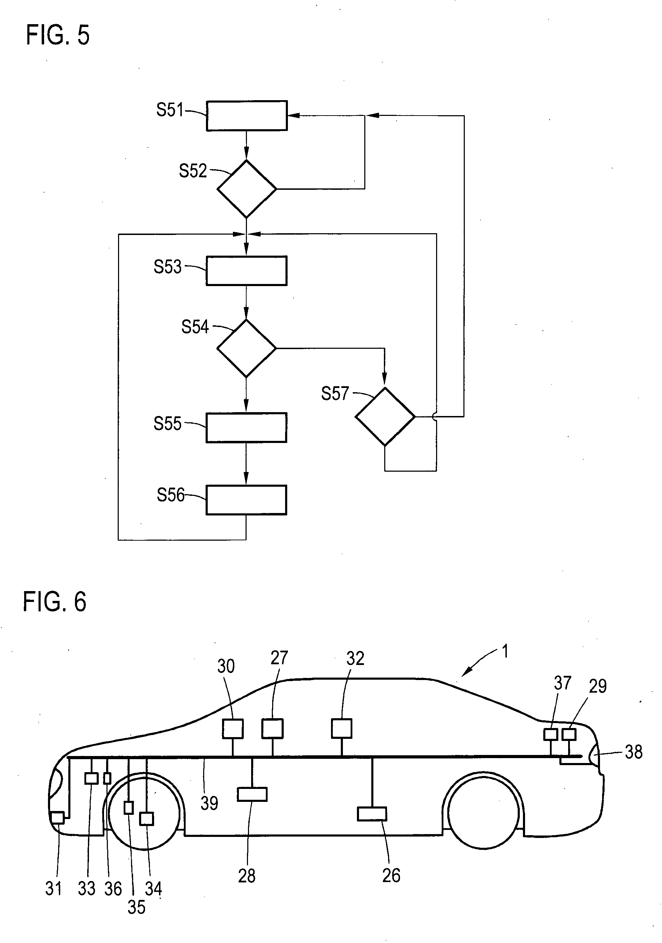

Fig. 5 zeigt ein Ablaufdiagramm eines Verfahrens, mit dem die weiteren Kraftfahrzeuge auf den Empfang einer solchen Steuertrajektorie reagieren können. In Schritt S51 werden Daten durch die Kommunikationseinrichtung des empfangenden Kraftfahrzeugs empfangen. In Schritt S52 wird überprüft, ob die Daten eine Steuertrajektorie sowie eine Prioritätsinformation umfassen und ob die Prioritätsinformation eine vorgegebene Bedingung erfüllt. Ist dies nicht der Fall, kann das Verfahren ab Schritt S51 wiederholt werden.

Falls eine Steuertrajektorie und eine zugehörige Prioritätsinformation empfangen wurde, so kann in Schritt S53 eine Wahrscheinlichkeit bestimmt werden, dass der eigene Fahrschlauch mit der Steuertrajektorie überlappt. Es kann in diesem Schritt ausschließlich eine Wahrscheinlichkeit bestimmt werden, da im gezeigten Beispiel davon ausgegangen wird, dass die Führung des empfangenden Kraftfahrzeugs durch einen Fahrer erfolgt, und das Verhalten des Fahrers nicht strikt vorausgesagt werden kann.

In Schritt S54 wird überprüft, ob die Wahrscheinlichkeit für ein Überlappen des eigenen Fahrschlauchs mit der Steuertrajektorie einen vorgegebenen Wahrscheinlichkeitsgrenzwert überschreitet. Überschreitet die Wahrscheinlichkeit den Grenzwert nicht, wird in Schritt S57 überprüft, ob eine solche Überlappung zukünftig mit einer zumindest geringen Wahrscheinlichkeit möglich ist. Ist diese Überlappung nicht möglich, kann das Verfahren wiederum mit Schritt S51 und dem Empfang weiterer Daten fortgesetzt werden. Ist eine solche Überlappung zukünftig möglich, wird das Verfahren nach einer kurzen Wartezeit mit Schritt S53 fortgesetzt und es wird erneut eine Wahrscheinlichkeit für den Überlapp des eigenen Fahrschlauches mit der Steuertrajektorie berechnet.

Wurde in Schritt S54 ermittelt, dass der Wahrscheinlichkeitsgrenzwert überschritten ist, so wird in Schritt S55 eine Vermeidungstrajektorie für das eigene Kraftfahrzeug berechnet, die einen Überlapp zwischen der Vermeidungstrajektorie und der empfangenen Steuertrajektorie vermeidet. Diese Vermeidungstrajektorie wird in Schritt S56 für einen vorgegebenen Zeitraum befahren, bevor anschließend in Schritt S53 überprüft wird, ob bei einer Rückübergabe der Fahrzeugführung an den Fahrer ein Überlapp zwischen der eigenen Trajektorie und der Steuertrajektorie wahrscheinlich ist.

Fig. 6 zeigt ein erfindungsgemäßes Kraftfahrzeug 1, umfassend ein Sicherheitssystem 26 sowie zwei Fahrerzustandserfassungssysteme 27, 28, die als Kamera bzw. in dem Gurt integrierter Pulssensor ausgebildet sind. Über den CAN-Bus liest das Sicherheitssystem 26 die Daten der Fahrerzustandserfassungsmittel 27 und 28 aus und bestimmt eine Fahrerzustandsgröße, die eine Wahrscheinlichkeit der Fahrunfähigkeit des Fahrers angibt. Überschreitet diese einen Grenzwert, so ist eine Auslösebedingung erfüllt und das Kraftfahrzeug wird, wie mit Bezug auf Fig. 1 erläutert, zu einem sicheren Abstellbereich geführt und dort abgestellt. Der sichere Abstellbereich wird aus der Ego-Position des Kraftfahrzeugs 1, die durch ein Positionssensor 37 bestimmt wird, der als GPS-Sensor ausgebildet ist, und die Daten einer digitalen Karte, die in einem Navigationssystem 30 gespeichert sind, sowie aus den Daten einer Kamera 31 mithilfe eines Umfeldmodells bestimmt. Die Bestimmung des Abstellbereichs ist ebenfalls mit Bezug auf Fig. 1 bereits erläutert. Bei Erfüllung der Auslösebedingung wird ergänzend die Warnblinkanlage 38 aktiviert und die Kommunikationsanlage 37 zur Abgabe eines Notrufes angesteuert. Die Führung des Kraftfahrzeugs 1 zu dem sicheren Abstellbereich und das Abstellen des Kraftfahrzeugs 1 erfolgt, indem das Sicherheitssystem 26 über den CAN-Bus 39 den Motor 33, die Steuerung 34, die Bremsen 35 und das automatische Getriebe 36 des Kraftfahrzeugs 1 ansteuert.

## Patentansprüche

1. Verfahren zum Betrieb eines Sicherheitssystems (20) eines Kraftfahrzeugs (1) mit einem Fahrerzustandserfassungsmittel (27, 28), das nach Ermitteln einer einen Fahrerzustand beschreibenden Fahrerzustandsgröße aus Daten des Fahrerzustandserfassungsmittels und Überprüfen, ob eine die Fahrerzustandsgröße auswertende, eine Unfähigkeit zur Führung des Kraftfahrzeugs (1) seitens des Fahrers anzeigende Auslösebedingung erfüllt ist, bei Erfüllen der Auslösebedingungen die folgenden Schritte durchführt:
• Ermitteln wenigstens eines für das Kraftfahrzeug (1) erreichbaren sicheren Abstellbereichs im Fahrzeugumfeld durch Auswerten von aus das Umfeld des Kraftfahrzeugs (1) beschreibenden Umfelddaten bestimmten Sicherheitsgrößen, die ein Unfallrisiko bei einem Abstellen des Kraftfahrzeugs (1) in einem Bereich oder an einer Position des Umfelds des Kraftfahrzeugs (1) beschreiben,
• Steuerung von Fahrzeugsystemen zur autonomen Längs- und Querführung des Kraftfahrzeugs (1) zum Abstellbereich und zum Abstellen des Kraftfahrzeugs (1) im Abstellbereich, wobei zur autonomen Längs- und Querführung des Kraftfahrzeugs (1) aus den Umfelddaten, der Ego-Position des Kraftfahrzeugs (1) und dem Abstellbereich eine Steuertrajektorie für das Kraftfahrzeug (1) für zumindest einen Abschnitt des Wegs zum Abstellbereich bestimmt wird,
**dadurch gekennzeichnet,**
**dass** wenn die Fahrbarkeit der Steuertrajektorie von der zukünftigen Bewegung wenigstens eines weiteren Kraftfahrzeugs (21, 22, 23 ,24, 25) abhängt, aus den Umfelddaten und der Steuertrajektorie ein Sollfahrmanöver oder eine Solltrajektorie, bei dessen bzw. deren Ausführung durch das weitere Kraftfahrzeug (21, 22, 23, 24, 25) die Steuertrajektorie für das Kraftfahrzeug (1) fahrbar ist, für das weitere Kraftfahrzeug (21, 22, 23, 24, 25) berechnet wird und das Sollfahrmanöver bzw. die Solltrajektorie beschreibende Fahranweisungsdaten durch Ansteuerung einer Kommunikationseinrichtung an das weitere Kraftfahrzeug übertragen werden.

2. Verfahren nach Anspruch 1,
**dadurch gekennzeichnet,**
**dass** zur Ermittlung des Abstellbereichs ein Umfeldmodell für das Umfeld des Kraftfahrzeugs (1) aus den Umfelddaten ermittelt wird, wobei das Umfeldmodell für zumindest Teile der Positionen und/oder Bereiche im Kraftfahrzeugumfeld Sicherheitsgrößen umfasst.

3. Verfahren nach Anspruch 2,
**dadurch gekennzeichnet,**
**dass** zur Bestimmung der Sicherheitsgrößen die Bereiche bzw. Positionen durch Auswertung der Umfelddaten Klassen zugeordnet werden, die jeweils eine zugeordnete Sicherheitsgröße aufweisen.

4. Verfahren nach Anspruch 2 oder 3,
**dadurch gekennzeichnet,**
**dass** der Abstellbereich aus dem Umfeldmodell als zusammenhängende Vereinigung von Bereichen und/oder Positionen bestimmt wird, deren Sicherheitsgrößen eine vorgegebene Sicherheitsbedingung erfüllen.

5. Verfahren nach wenigstens einem der vorangehenden Ansprüche,
**dadurch gekennzeichnet,**
**dass** bei Ermittlung des Abstellbereiche wenigstens ein zusätzliches Kriteriums berücksichtigt wird.

6. Verfahren nach Anspruch 5,
**dadurch gekennzeichnet,**
**dass** das zusätzliche Kriterium eine Entfernung des Abstellbereichs von der Ist-Position des Kraftfahrzeugs (1) und/oder eine aus den Umfelddaten ermittelte Versorgungsgröße, die die Verfügbarkeit von medizinischer Versorgung im Abstellbereich beschreibt, auswertet.

7. Verfahren nach einem der vorausgehenden Ansprüche,
**dadurch gekennzeichnet,**
**dass** zusätzlich zu den Fahranweisungsdaten eine Prioritätsinformation übertragen wird.

8. Verfahren nach Anspruch 7,
**dadurch gekennzeichnet,**
**dass** bei Empfang von Fahranweisungsdaten eines weiteren Kraftfahrzeugs sowie einer zugeordneten Prioritätsinformation durch die Kommunikationseinrichtung, bei Erfüllung einer vorgegebenen Ausführbedingung, die zumindest die Prioritätsinformation auswertet, das Sicherheitssystem die Fahrzeugsysteme zur autonomen Durchführung des durch die Fahranweisungsdaten beschriebenen Sollfahrmanövers oder zur Führung des Kraftfahrzeugs (1) entlang der durch die Fahranweisungsdaten beschriebenen Solltrajektorie ansteuert und/oder eine Hinweiseinrichtung zur Gabe eines Hinweises an den Fahrer ansteuert, um ihn zur Durchführung des Sollfahrmanövers oder zur Führung des Kraftfahrzeugs (1) entlang der Solltrajektorie anzuleiten.

9. Verfahren nach einem der vorausgehenden Ansprüche ,
**dadurch gekennzeichnet,**
**dass** nach Ermittlung der Steuertrajektorie eine Kommunikationseinrichtung des Kraftfahrzeugs (1) zur Übertragung der Steuertrajektorie an wenigstens ein weiteres Kraftfahrzeug (21, 22, 23, 24, 25) angesteuert wird.

10. Verfahren nach einem der vorangehenden Ansprüche,
**dadurch gekennzeichnet,**
**dass** bei Erfüllung der Auslösebedingung eine Kommunikationseinrichtung (37) des Kraftfahrzeugs (1) zur Übertragung eines automatischen Notrufes angesteuert wird.

11. Verfahren nach Anspruch 10,
**dadurch gekennzeichnet,**
**dass** zusätzlich zum automatischen Notruf eine Ortsinformation übertragen wird, die den Ort des Abstellbereichs beschreibt

12. Verfahren nach einem der vorangehenden Ansprüche,
**dadurch gekennzeichnet,**
**dass** bei Erfüllung der Auslösebedingung vor Ausführung der weiteren Schritte, ein Prüfschritt durchgeführt wird, in dem eine Hinweiseinrichtung zur Ausgabe einer Aufforderung zu einer Bedieneingabe an den Fahrer angesteuert wird, und das Verfahren abgebrochen wird, wenn die Bedieneingabe während eines vorgegebenen Zeitintervalls nach der Aufforderung erfasst wird.

13. Verfahren nach einem der vorangehenden Ansprüche,
**dadurch gekennzeichnet,**
**dass**, wenn eine vorgegebene Rückübergabebedingung während der autonomen Längs- und Querführung des Kraftfahrzeugs (1) erfüllt ist, die insbesondere eine Bedienung eines Bedienelementes auswertet, eine Rückübergabe der Fahrzeugführung an den Fahrer erfolgt und die autonomen Längs- und Querführung beendet wird.

14. Verfahren nach einem der vorangehenden Ansprüche,
**dadurch gekennzeichnet,**
**dass** die zur autonomen Längs- und Querführung des Kraftfahrzeugs (1) angesteuerten Fahrzeugsysteme ein Bremssystem (35) und/oder ein Motor (33) und/oder eine Lenkung (34) und/oder ein vorzugsweise automatische Getriebe (36) des Kraftfahrzeugs (1) umfassen.

15. Verfahren nach einem der vorangehenden Ansprüche,
**dadurch gekennzeichnet,**
**dass** das Kraftfahrzeug ein Fahrerassistenzsystem zur autonomen oder teilautonomen Führung des Kraftfahrzeugs (1) umfasst, wobei das Verfahren auch durchgeführt wird, wenn das Fahrerassistenzsystem eine Hinweiseinrichtung zur Gabe eines Rückübernahmehinweis an den Fahrer ansteuert und innerhalb eines vorgegebenen Zeitintervalls und/oder nach einer vorgegebenen Anzahl von Wiederholungen des Rückübernahmehinweises keine vorgegebene Bedieneingabe erfasst wird.

16. Verfahren nach einem der vorangehenden Ansprüche,
**dadurch gekennzeichnet,**
**dass** nach Erfüllung der Auslösebedingung wenigstens eine Hinweiseinrichtung zur Gabe eines Hinweises an weitere Verkehrsteilnehmer angesteuert wird.

17. Kraftfahrzeug umfassend ein Fahrerzustandserfassungsmittel (27, 28) zur Erfassung eines Fahrerzustandes, und ein Sicherheitssystem (26),
**dadurch gekennzeichnet,**
**dass** das Sicherheitssystem (26) zur Durchführung eines Verfahrens nach einem der vorangehenden Ansprüche ausgebildet ist.

## Claims

1. A method for operating a safety system (20) of a motor vehicle (1) having a driver status detection means (27, 28), which after ascertaining a driver status parameter describing a driver status from data of the driver status detection means and reviewing, whether a trigger condition evaluating the driver status parameter, indicating an inability to drive the motor vehicle (1) on the part of the driver is met, carries out the following steps if the trigger conditions are met:
• Identify at least one safe parking area accessible for the motor vehicle (1) in the vehicle environment by evaluation of safety parameters determined from the environment data describing he environment of the motor vehicle (1), which parameters describe an accident risk during the parking of the motor vehicle (1) in an area or in a positon of the environment of the motor vehicle (1),
• Control of vehicle systems for the autonomous longitudinal and transverse guidance of the motor vehicle (1) to the parking area and to the parking of the motor vehicle (1) in the parking area, wherein for the autonomous longitudinal and transverse guidance of the motor vehicle (1) a control trajectory for the motor vehicle (1) is determined from the environmental data, the ego-position of the motor vehicle (1) and the parking area for at least a section of the way to the parking area,
**characterized in**
**that** if the drivability of the control trajectory depends on the future movement at least of one other motor vehicle (21, 22, 23, 24, 25), from the environmental data and the control trajectory a target driving maneuver or a target trajectory, in the performance of which by the other motor vehicle (21, 22, 23, 24, 25) the control trajectory for the motor vehicle (1) is drivable, is calculated for the other motor vehicle (21, 22, 23, 24, 25) and driving instruction data describing the target driving maneuver or the target trajectory are transmitted by activation of a communications device to the other motor vehicle.

2. A method according to claim 1,
**characterized in**
**that** for ascertaining the parking area an environmental model for the environment of the motor vehicle (1) is determined from the environmental data, wherein the environmental model comprises safety parameters for at least parts of the positions and/or areas in the motor vehicle environment.

3. A method according to claim 2,
**characterized in**
**that** for determining the safety parameters the areas or positions are assigned classes by the evaluation of the environmental data, which classes in each case have an assigned safety parameter.

4. A method according to claim 2 or 3,
**characterized in**
**that** the parking area is determined from the environmental model as a connected union of areas and/or positions, the safety parameters of which meet the predetermined safety condition.

5. A method according to at least one of the preceding claims,
**characterized in**
**that** in determining the parking areas at least one additional criterion is taken into consideration.

6. A method according to claim 5,
**characterized in**
**that** the additional criterion evaluates a distance of the parking area from the actual positon of the motor vehicle (1) and/or a supply parameter determined from the environmental data, which describes the availability of medical care in the parking area.

7. A method according to one of the preceding claims,
**characterized in**
**that** in addition to the driving instruction data priority information is transmitted.

8. A method according to claim 7
**characterized in**
**that** upon receipt of the driving instruction data of another motor vehicle as well as the assigned priority information by the communications device, upon satisfaction of a predetermined condition of execution, which evaluates at least the priority information, the safety system activates the vehicle systems for the autonomous performance of the target driving maneuver described by the driving instruction data or for guiding the motor vehicle (1) along the target trajectory described by the driving instruction data and/or activates an instruction device for giving an instruction to the driver, in order to guide him in performing the target driving maneuver or for guiding the motor vehicle (1) along the target trajectory.

9. A method according to one of the preceding claims,
**characterized in**
**that** after determining the control trajectory a communications device of the motor vehicle (1) is activated to transmit the control trajectory to at least one other motor vehicle (21, 22, 23, 24, 25).

10. A method according to one of the preceding claims,
**characterized in**
**that** upon satisfaction of the trigger condition a communications device (37) of the motor vehicle (1) is activated to transmit an automatic emergency call.

11. A method according to claim 7
**characterized in**
**that** in addition to the automatic emergency call location information is transmitted, which describes the location of the parking area.

12. A method according to one of the preceding claims,
**characterized in**
**that** upon satisfaction of the trigger condition prior to execution of the other steps, a test step is implemented, in which the instruction device is activated for outputting a request for an operational input to the driver, and the process is aborted, if the operational input is detected during a predetermined time interval after the request.

13. A method according to one of the preceding claims,
**characterized in**
**that** if a predetermined return condition is satisfied during the autonomous longitudinal and transverse guidance of the motor vehicle (1), which evaluates in particular the operation of an operational element, a return of the vehicle guidance to the driver takes place and the autonomous longitudinal and transverse guidance is ended.

14. A method according to one of the preceding claims,
**characterized in**
**that** the vehicle systems activated for the autonomous longitudinal and transverse guidance of the motor vehicle (1) comprise a braking system (35) and/or a motor (33) and/or a steering (34) and/or a preferably automatic transmission (36) of the motor vehicle (1).

15. A method according to one of the preceding claims,
**characterized in**
**that** the motor vehicle comprises a driver assistance system for autonomous or semi-autonomous guidance of the motor vehicle (1), wherein the process is also carried out, if the driver assistance system activates an instruction device for giving an instruction to the driver to take over again and no predetermined operational input is detected within a predetermined time interval and/or after a predetermined number of repetitions of the instruction to take over again.

16. A method according to one of the preceding claims,
**characterized in**
**that** after satisfaction of the trigger condition at least one instruction device is activated for giving an instruction to other motorists.

17. A motor vehicle comprising a driver status detection means (27, 28) for detecting a driver status, and a safety system (26),
**characterized in**
**that** the safety system (26) is designed for implementing a method according to one of the preceding claims.

## Revendications

1. Procédé de fonctionnement d'un système de sécurité (20) d'un véhicule automobile (1) avec un moyen de saisie de la situation du chauffeur (27, 28), qui, après avoir déterminé une grandeur de situation du chauffeur décrivant la situation du chauffeur à partir de données du moyen de saisie de la situation du chauffeur et vérifié qu'est satisfaite une condition de déclenchement exploitant la grandeur de situation du chauffeur et montrant une incapacité de conduite du véhicule automobile (1) côté chauffeur, réalise les étapes suivantes lorsque sont remplies les conditions de déclenchement :
• détermination au moins d'une zone d'arrêt sûre qui peut être atteinte pour le véhicule automobile (1) dans l'environnement du véhicule par exploitation de grandeurs de sécurité déterminées à partir de données d'environnement décrivant l'environnement du véhicule automobile (1), qui décrivent un risque d'accident lors d'un arrêt du véhicule automobile (1) dans une zone ou une position de l'environnement du véhicule automobile (1),
• commande de systèmes du véhicule pour un guidage longitudinal et transversal autonome du véhicule automobile (1) jusqu'à la zone d'arrêt et jusqu' à l'arrêt du véhicule automobile (1) dans la zone d'arrêt, dans lequel, pour le guidage longitudinal et transversal autonome du véhicule automobile (1), on détermine à partir des données d'environnement, de l'égo-position du véhicule automobile (1) et de la zone d'arrêt une trajectoire de commande pour le véhicule automobile (1) pour au moins une section du chemin menant à la zone d'arrêt,
**caractérisé en ce que**,
si le caractère carrossable de la trajectoire de commande dépend du déplacement futur au moins d'un autre véhicule automobile (21, 22, 23, 24, 25), on calcule pour l'autre véhicule automobile (21, 22, 23, 24, 25), à partir des données d'environnement et de la trajectoire de commande, une manoeuvre de conduite théorique ou un trajectoire théorique, dans laquelle réalisation par l'autre véhicule automobile (21, 22, 23, 24, 25) la trajectoire de commande peut être carrossable pour le véhicule automobile (1), et des données de consigne de conduite décrivant la manoeuvre de conduite théorique ou la trajectoire théorique sont transmises à l'autre véhicule automobile par commande d'un dispositif de communication.

2. Procédé selon la revendication 1,
**caractérisé en ce que**,
pour déterminer la zone d'arrêt, on détermine un modèle d'environnement pour l'environnement du véhicule automobile (1) à partir des données d'environnement, dans lequel le modèle d'environnement comprend des grandeurs de sécurité pour au moins des parties des positions et/ou des zones de l'environnement du véhicule automobile.

3. Procédé selon la revendication 2,
**caractérisé en ce que**,
pour déterminer les grandeurs de sécurité, on affecte aux zones ou aux positions, par évaluation des données d'environnement, des classes qui présentent respectivement une grandeur de sécurité affectée.

4. Procédé selon la revendication 2 ou la revendication 3,
**caractérisé en ce que** :
la zone d'arrêt est déterminée à partir du modèle d'environnement comme une combinaison cohérente de zones et/ou de positions dont les grandeurs de sécurité remplissent une condition de sécurité préétablie.

5. Procédé selon l'une quelconque des revendications précédentes,
**caractérisé en ce que**,
lors de la détermination des zones d'arrêt, on tient compte au moins d'un critère supplémentaire.

6. Procédé selon la revendication 5,
**caractérisé en ce que** :
le critère supplémentaire exploite une distance entre la zone d'arrêt et la position réelle du véhicule automobile (1) et/ou une grandeur d'approvisionnement déterminée à partir des données d'environnement, qui décrit la disponibilité de s'approvisionner en médicaments dans la zone d'arrêt.

7. Procédé selon l'une quelconque des revendications précédentes,
**caractérisé en ce que** :
une information de priorité est transmise en plus des données de consigne de conduite.

8. Procédé selon la revendication 7,
**caractérisé en ce que**,
lors de la réception de données de consigne de conduite d'un autre véhicule automobile ainsi que d'une information de priorité affectée par le dispositif de communication, lorsqu'est remplie une condition de réalisation préétablie qui exploite au moins l'information de priorité, le système de sécurité commande les systèmes du véhicule pour réaliser de manière autonome la manoeuvre de conduite théorique décrite par les données de consigne de conduite ou pour guider le véhicule automobile (1) le long de la trajectoire théorique décrite par les données de consigne de conduite et/ou commande un dispositif d'indication pour délivrer une indication au chauffeur afin de le guider pour réaliser la manoeuvre de conduite théorique ou pour guider le véhicule automobile (1) le long de la trajectoire théorique.

9. Procédé selon l'une quelconque des revendications précédentes,
**caractérisé en ce que**,
après détermination de la trajectoire de commande, un dispositif de communication du véhicule automobile (1) est commandé pour transmettre la trajectoire de commande à au moins un autre véhicule automobile (21, 22, 23, 24, 25).

10. Procédé selon l'une quelconque des revendications précédentes,
**caractérisé en ce que**,
lorsque la condition de déclenchement est satisfaite, un dispositif de communication (37) du véhicule automobile (1) est commandé pour transmettre un appel de détresse automatique.

11. Procédé selon la revendication 10,
**caractérisé en ce que**,
en plus de l'appel de détresse automatique est transmise une information locale qui décrit le lieu de la zone d'arrêt.

12. Procédé selon l'une quelconque des revendications précédentes,
**caractérisé en ce que**,
lorsque la condition de déclenchement est satisfaite avant la réalisation des autres étapes, on effectue une étape d'essai dans laquelle un dispositif d'indication est commandé pour délivrer au chauffeur une invitation à une mise en service et le procédé est interrompu lorsque la mise en service est détectée pendant un intervalle de temps prédéterminée après l'invitation.

13. Procédé selon l'une quelconque des revendications précédentes,
**caractérisé en ce que**,
si une condition de renvoi prédéterminée est satisfaite au cours du guidage longitudinal et transversal autonome du véhicule automobile (1), qui exploite en particulier une mise en service d'un élément de commande, il se produit un renvoi de la conduite du véhicule au chauffeur et le guidage longitudinal et transversal autonome est terminé.

14. Procédé selon l'une quelconque des revendications précédentes,
**caractérisé en ce que** :
les systèmes du véhicule commandés pour le guidage longitudinal et transversal autonome du véhicule automobile (1) comprennent un système de freinage (35) et/ou un moteur (33) et/ou une direction (34) et/ou une transmission de préférence automatique (36) du véhicule automobile (1).

15. Procédé selon l'une quelconque des revendications précédentes,
**caractérisé en ce que** :
le véhicule automobile comprend un système d'assistance au chauffeur pour le guidage autonome ou en partie autonome du véhicule automobile (1), dans lequel le procédé est réalisé même si le système d'assistance au chauffeur commande un dispositif d'indication pour délivrer une indication de renvoi au chauffeur et ne détecte aucune mise en service prédéterminée dans un intervalle de temps prédéterminé et/ou après un nombre prédéterminé de répétitions de l'indication de renvoi.

16. Procédé selon l'une quelconque des revendications précédentes,
**caractérisé en ce que** :
après satisfaction de la condition de déclenchement, au moins un dispositif d'indication est commandé pour délivrer une indication à d'autres participants au trafic.

17. Véhicule automobile comprenant un moyen de saisie de la situation du chauffeur (27, 28) pour détecter une situation du chauffeur et un système de sécurité (26),
**caractérisé en ce que** :
le système de sécurité (26) est conçu pour réaliser un procédé selon l'une quelconque des revendications précédentes.
